# EUROPEAN PATENT APPLICATION

(11) **EP 1 130 868 A2**
(43) Date of publication of application: **05.09.2001**
(21) Application number: 01301791.8
(22) Date of filing: 27.02.2001
(51) Int. Cl.: H04L 27/26

(54) **Coprocessor for use in DMT modems**

(30) Priority: 29.02.2000 GB 0004869
(71) Applicant: Virata Limited, Cambridge CB3 0BL (GB)
(72) Inventor: Milway, David, Cottenham, Cambridge CB4 4RB (GB)
(74) Representative: Cozens, Paul Dennis

(57) **Abstract**

A co-processor for a DSP adapted for use with a DMT communication system. The co-processor includes a decoder for converting an input stream of QAM coordinated pairs into variable length sequences of bits and a combiner having a data register and an offset register for performing a cycle in which variable length bit sequences from the decoder are assembled into a block of data having a predetermined number of fixed length data words. An output buffer is provided for writing the data words into memory, whereby the data register can be preloaded with a part of a data word in memory, the offset register being set accordingly and the address register being set to the word-aligned address of the data word in memory, so that received data can be stored at a non-word aligned address.

## Description

This invention relates to a co-processor for a DSP (Digital Signal Processor) having access to a memory, the DSP being adapted for use with a DMT (Discrete Multi-Tone) communication system. The co-processor can be used in particular, but not exclusively, in a QAM decoding and encoding unit for an xDSL (Digital Subscriber Line) system, e.g. where the co-processor shares the memory of the DSP. In a typical case, the QAM unit (under the direction of a software control program) converts digital binary data to quadrature amplitude data pairs (and vice versa) for use in a DMT xDSL system.

QAM of digital data signals is employed in communication systems including microprocessor bus modem transmitters/receivers in order to provide high speed and reliable communication links. An example of such a system is disclosed in US-A-5619505 (assigned to Motorola) to which reference is made for further details of QAM.

The present invention provides a co-processor for a DSP (Digital Signal Processor) having access to a memory, the DSP being adapted for use with a DMT (Discrete Multi-Tone) communication system, the co-processor comprising:
(a) a decoder for converting an input stream of QAM (Quadrature Amplitude Modulated) coordinate pairs into variable length sequences of bits;
(b) a combiner including a data register and an offset register for performing a cycle in which variable length bit sequences from the decoder are assembled into a block of data having a predetermined number of fixed length data words,
(c) an output buffer, including an address register, for writing said data words into said memory, whereby said data register can be preloaded with a part of a data word in said memory, the offset register being set accordingly and the address register being set to the word-aligned address of the data word in said memory, such that the received data can be stored at a non-word aligned address in memory.

The invention thereby facilitates the storage of data to non-word aligned addresses where the memory system would normally (or otherwise) provide for the storage of data words to word aligned addresses.

Preferably, the data register can operate as a shift register.

The co-processor can be used in a QAMD unit in an ADSL DTM system, the co-processor sharing the memory of the DSP, and the unit including a transmitter module and a receiver module. The transmitter module can include an input buffer, a slicer, an encoder, and data buses for their interconnection and with the memory of the DSP, where the transmitter module is responsive to a control program to perform (a) initialisation; where bin data is derived by setting the number of data bins and a mapping table is generated containing the number of bits for each bin in the DTM system; (b) bit slicing; where input data is separated into variable length bit sequences; (c) conversion (encoding) of the bit sequences into amplitude pairs; and optionally (d) synchronisation; where synchronisation data is automatically generated in accordance with the bin data. The receiver module can include an output buffer, a combiner, a decoder, a memory and data buses for their interconnection; the receiver being responsive to a control program to perform (f) initialisation; where the number of data bins are set and a mapping table is generated for the table containing the number of bits for each bin, (g) decoding; where the QAM data pairs received from the transmitter are decoded in accordance with the bin data generated in the initialisation; (h) combining; whereby the resulting bit stream is combined so as to reproduce the original data.

Memory offsets can be provided for the transmitter and receiver modules, whereby a control program inserts an offset into a first word of input data where the conversion will start, the offset providing any necessary word alignment before the QAM unit starts to processes input data.

The control program can also set different buffer addresses so that one buffer can be filled whilst data is processed in another buffer.

An embodiment of the invention will now be described with reference to the accompanying drawings in which:
Fig. 1 is an overview of a typical xDSL receiver;
Fig. 2 is an overview of a typical xDSL transmitter;
Fig. 3 shows a typical carrier channel bit allocation table;
Fig. 4 shows a block diagram of a DSP incorporating the QAMD coprocessor;
Fig. 5 shows the transmitter block of the QAMD;
Fig. 6 shows the receiver block of the QAMD; and
Figs. 7-18 are flow diagrams which are used in explaining the operation of the QAMD coprocessor.

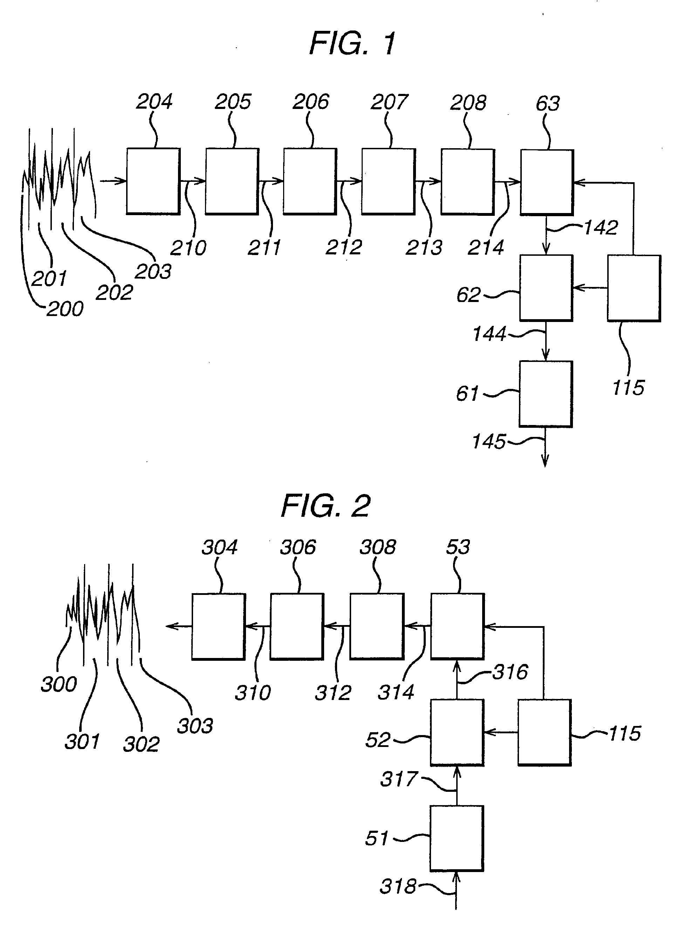

Referring to the drawings, Fig. 1 shows an overview of a typical xDSL receiver, taking as its input received electrical signals 200, and producing at its output a received data stream 145. The sequence of received symbols, or frames, 201, 202, 203 is sampled by the ADC 204 at a substantially fixed sampling rate, to produce a stream of oversamples 210. The sample stream is then downsampled using a standard downsampler 205, and passed through a traversal equaliser 206. The resultant sample stream 212 is then processed by an FFT 207 using n frequency bins, such that each carrier tone in the signal maps to a distinct frequency bin in the FFT.

The output of the FFT 213 comprises a sequence of n pairs of amplitudes (of in-phase and quadrature components in each frequency bin), which are then processed by a frequency domain equaliser 208 to correct for phase shifts. The amplitude pairs 213 then feed into a decoder unit 63, which, using a table of carrier channel bit allocations 115, converts the amplitude pairs into variable-length sequences of bits 142 using known QAM decoding techniques. The bits are then combined by the combiner 62 to produce an output stream of fixed-length data words 144. For the reason of avoiding problems with latency, amongst other things, an output buffer 61 is provided, which stores the output data words in memory when the memory bus is free.

Fig. 2 shows an overview of a typical xDSL transmitter, taking as its input a transmitted sample stream 318, and producing at its output the transmitted electrical signals 300. The output data words 318 are held by the input buffer 51 until the slicer 52 is ready to receive them. The slicer 52 then outputs variable-length sequences of bits 316 according to the table of channel bit allocations 115, and the QAM encoder then produces one amplitude pair per sequence of bits. The amplitude pairs 314 then feed into the iFFT (inverse FFT) 308, which creates a sample stream 312 at some multiple of the symbol rate. The upsampler 306 produces a higher sampling rate sample stream 310, which is then output by the DAC 304 as the transmitted symbols 300.

In the preferred embodiment, with the exception of the FFT and iFFT blocks, all of the processing stages are implemented in hardware within a single ASIC device with a software controller overseeing the various stages. This division between software and hardware offers fast processing where it is required, yet retains a considerable amount of flexibility. It should be noted, however, that all of the stages other than the ADC 204 and DAC 304 may be implemented solely or substantially in software, subject to the availability of sufficient processing power, or wholly or substantially in hardware. It is also possible to add, move or remove various of the processing stages described above; for example, additional down-sampling stages may be added in the receiver, possibly in conjunction with mechanisms to compensate for phase errors due to a mismatch between an internal and external clock, and equalisation may be achieved by different means. Also, some extra complexity is required in the receiver and transmitter on account of the required intersymbol gaps.

The transmitter module can operate in one of two modes during the transmission of each symbol: normal and sync mode. In the normal mode, the amplitude pairs 314 are formed from the input data read from the DSP memory. In the sync mode, the amplitude pairs 314 are generated automatically within the QAMD unit to form a sync output block. The contents and function of this block will be known in accordance with the various xDSL standards.

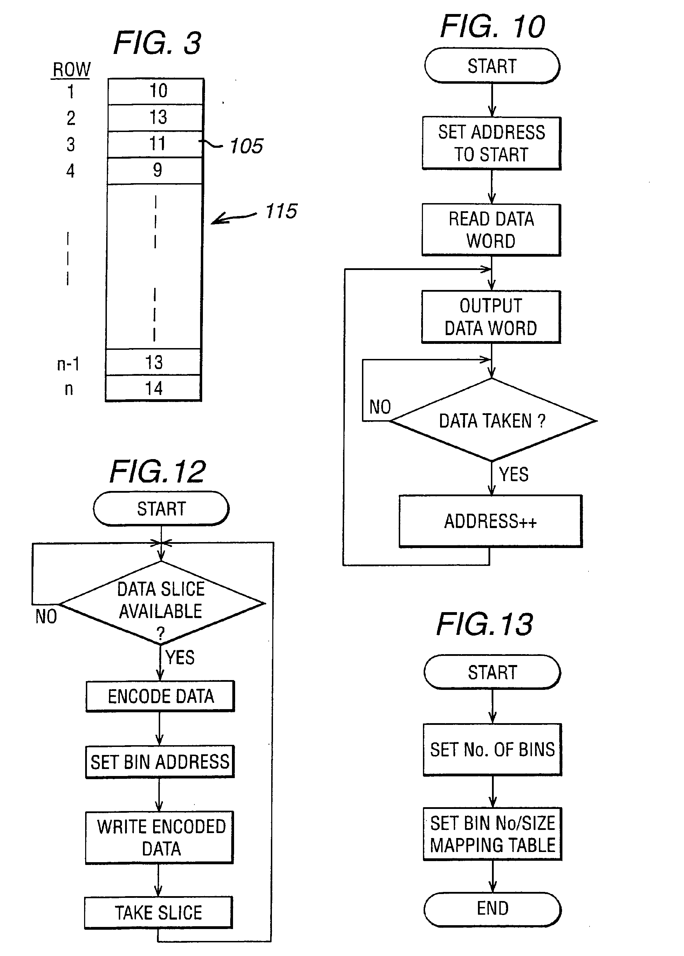

Fig. 3 shows a typical carrier channel bit allocation table 115. The table has n rows, where n is the number of frequency bins in the FFT and iFFT. Each entry 110 of the table, corresponding to one frequency bin, contains the number of bits which are to be encoded in the bin. The carrier channel bit allocation table reflects the measured information capacity of the link at different frequencies, and the table is updated regularly.

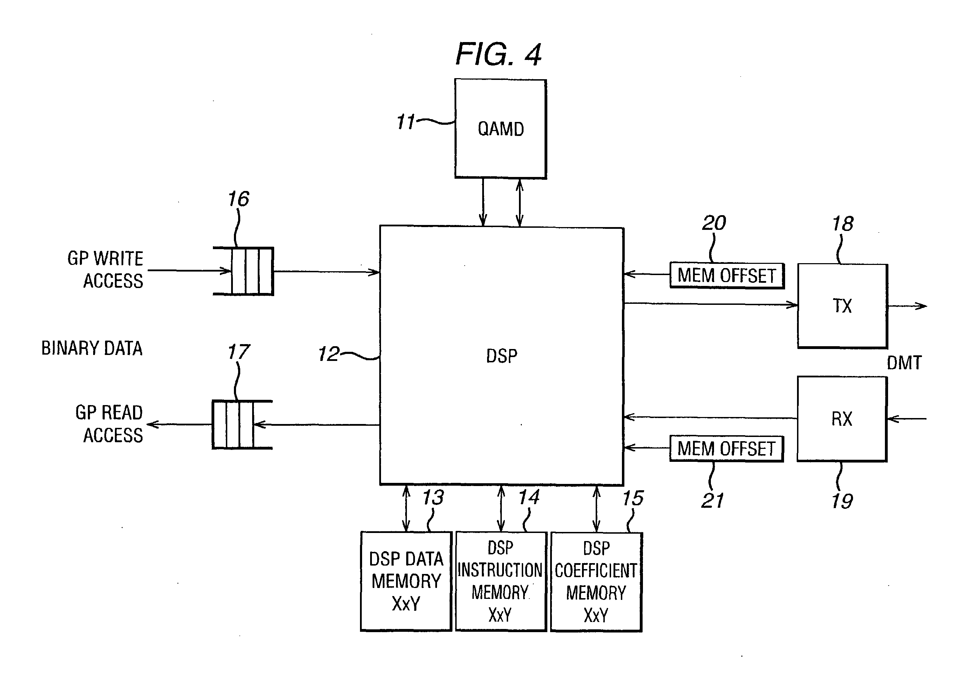

With reference to Fig. 4, the DSP 12 incorporates an internal memory, or cache, 24, which is subdivided into a data memory 13, instruction memory 14 and coefficient memory 15. The DSP has transmitter and receiver ports 18 and 19 connected to a dedicated DMT unit, through which the QAM amplitude pairs 214 and 314 are transferred. The DSP has GP write access 16 and GP read access 17, which provide access to external memory and other devices.

Memory offsets 20, 21 are provided for the transmitter and receiver modules, whereby a control program inserts an offset into a first word of input data where the conversion will start, the offset providing any necessary word alignment before the QAM unit starts to processes input data.

The QAMD coprocessor 11, which has access to the internal memory 24 of the DSP 12, has six sub-blocks which provide the decoder 63, combiner 62 and output buffer 61 functions of the receiver and the corresponding encoder 53, slicer 52 and input buffer 51 functions of the transmitter. The transmitter and receiver modules operate independently of each other, and each sub-block within each module has independent access to the DSP memory, allowing the available DSP memory bandwidth to be used efficiently. The coprocessor also features various inputs which allow the controlling software in the DSP to set the buffer addresses used by the sub-blocks; initialise the receiver and transmitter appropriately, and otherwise control the operation of the receiver and transmitter.

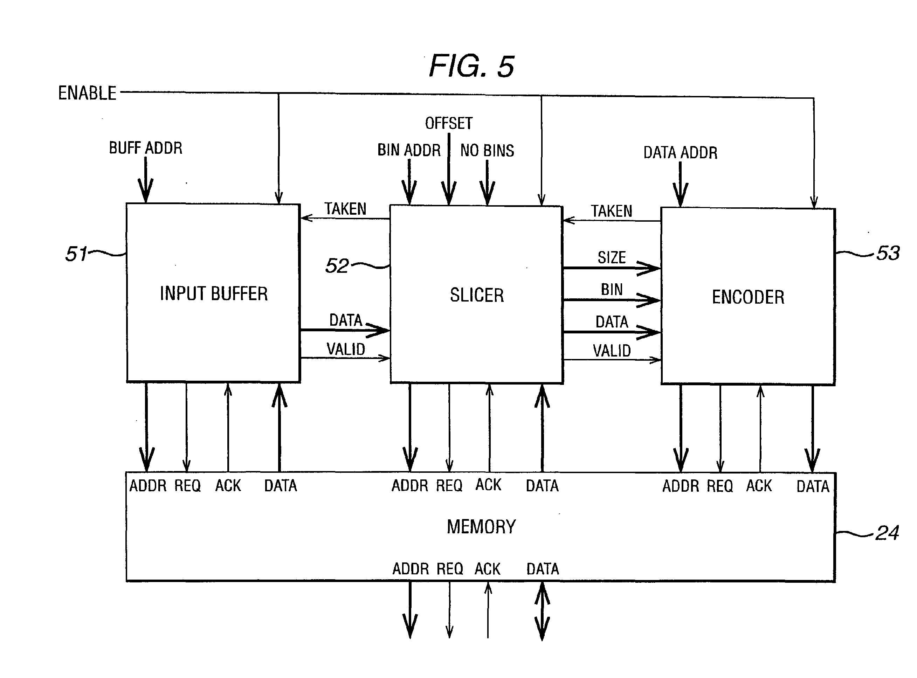

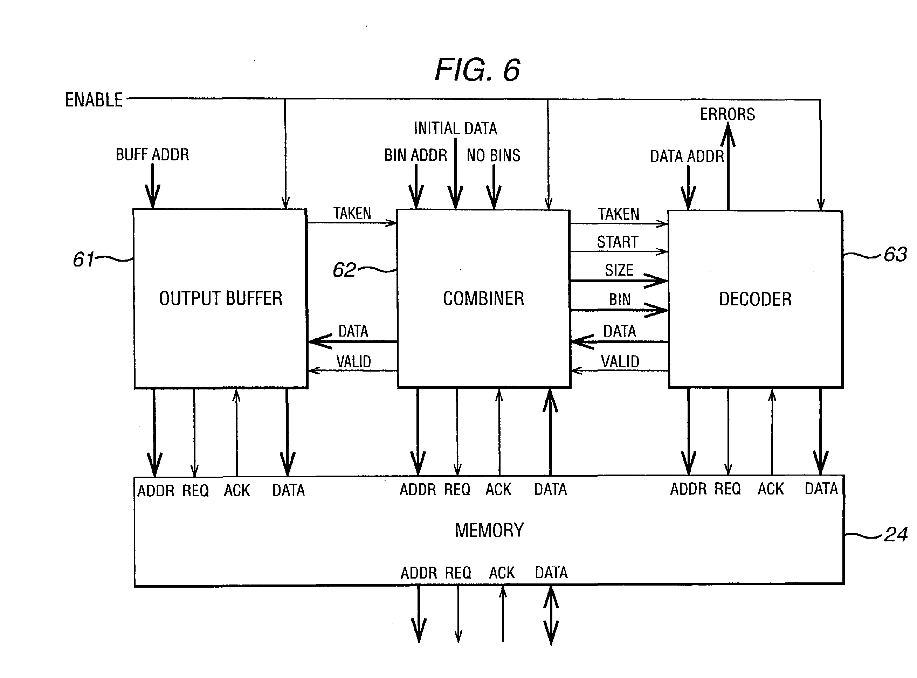

Fig. 5 shows the transmitter module of the QAMD coprocessor in more detail and shows the interconnections between the input buffer 51, slicer 52, encoder 53, DSP 12 and DSP memory 24. These interconnections and the division of functionality between the sub-blocks maximises the efficiency of the receiver and transmitter by performing as much of the processing as possible in parallel. The receiver is shown in Fig. 6, and has corresponding interconnections between the decoder 63, combiner 62, output buffer 61, DSP 12 and DSP memory 24.

The transmitter and the receiver are operated by a software control program issuing instructions as required. For example, the software first sets up general control information, setting the number of bins to process and the mapping table which maps slots to in the DMT system to data bins.

The software control program runs on the DSP to which the coprocessor is attached, but alternative control arrangements may be possible, for example if two xDSL systems operate in parallel.

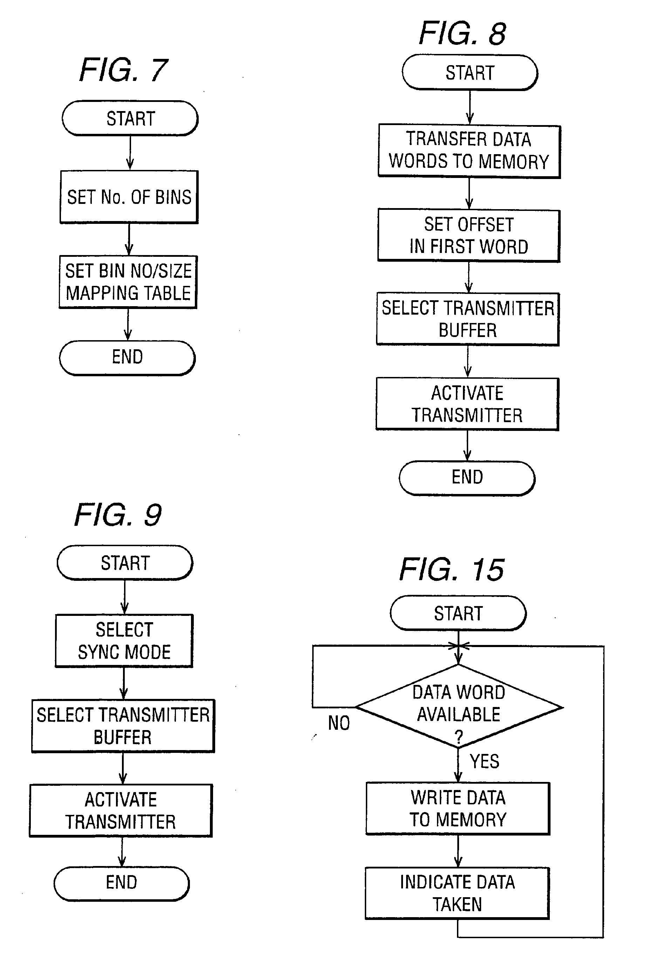

Referring to Fig. 7, once the QAMD transmitter has been initialised by setting the number of bins and setting the bin no./size of the mapping table 115, the controlling software will issue requests to convert data from words of binary data 318 to QAM pairs 314 to be passed to the DSP for processing. Before the conversion commences, the DSP provides the input buffer 51 with a buffer address from which to start reading the data. The buffer address is automatically incremented after each word of data is read.

Fig. 8 illustrates the QAMD transmitter main per symbol code where the following steps are carried out:
1) Place the binary data in the DSP memory 24,
2) Set the offset into the first word where the conversion process will start. This will allow the QAMD to process data which is not word aligned.
3) Set the address of the buffer. This allows the controlling software to use different buffers so that it can overlap filling one buffer with processing another buffer.
4) The QAMD transmitter is activated. When the conversion process is completed a flag is set in the QAMD transmit control register.

Referring to Fig. 9, this shows the QAMD transmitter special synchronisation symbol code technique, whereby the QAMD generates special data that is required for SYNC blocks used for controlling synchronisation of the data link between respective QAMDs. The following sequence is used to generate this SYNC data:
1) Select SYNC mode by setting the control bit.
2) Select the buffer where the data will be written.
3) Activate the transmitter. Once activated the QAMD will generate the correct data and write the converted data into the DSPs memory 24.

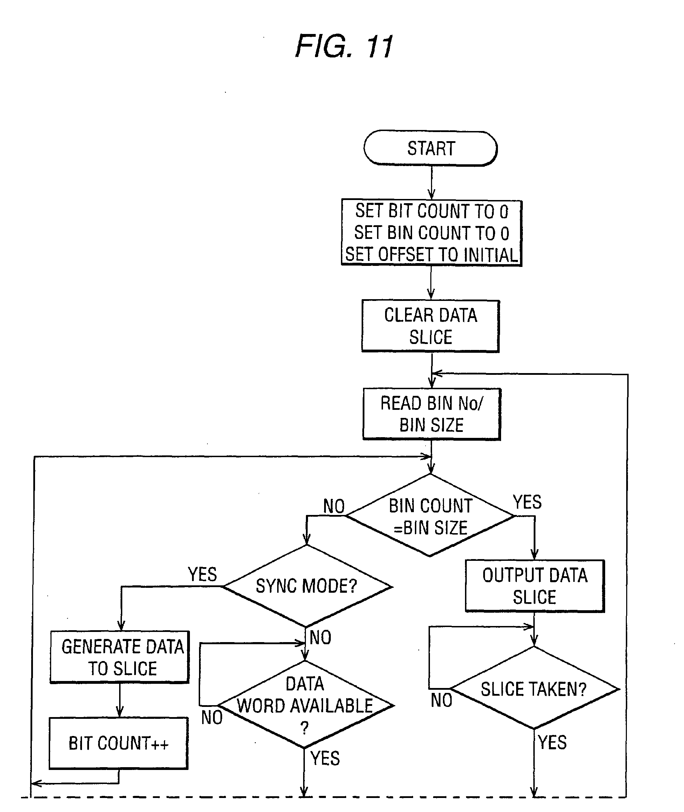

Referring to Fig. 10, this illustrates the QAMD transmitter input buffer 51 state machine which follows the sequence shown below:
1) Load the start address into its address register.
2) Read a data word for the memory of the DSP at the address specified.
3) Output the data word to the slicer module.
4) Wait until the data is taken.
5) Increment the address register value; this increment is for a word value.
6) Return and repeat from step 2 (whereby the state machine will continue to supply data words until it is reset).

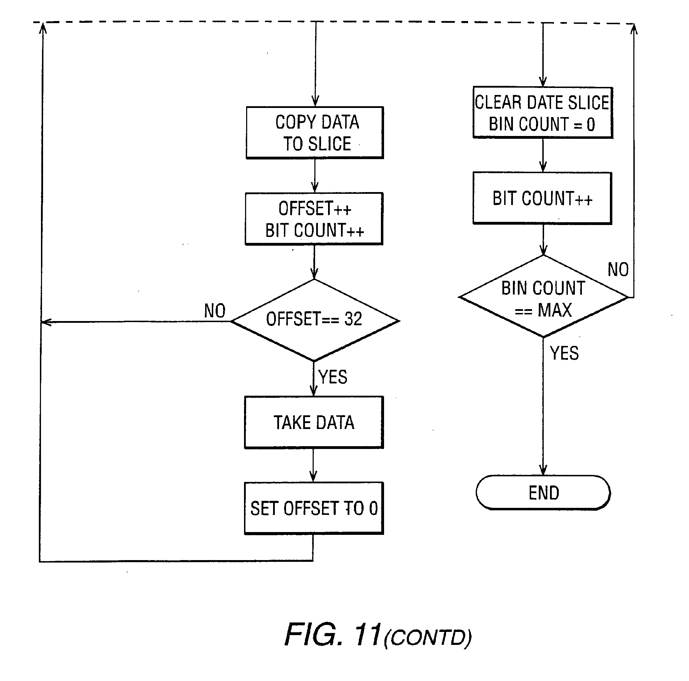

Fig. 11 shows the QAMD transmitter data slicer 52 state machine wherein the slicer 52 operates with the following steps:
1) Set the bit counter register, the bin counter register and the data offset register to their initial value.
2) Clear the data register.
3) Read the bin number and bin size data from the table in the memory of the DSP.
4) Check if the correct amount of data has been transferred for the current bin being processed. If the answer is "No", then go to step 6 (if "yes", then go to step 12).
5) Check that operation is in SYNC mode, (if "No" then go to step 7, if "yes" then go to step 18).
6) Wait for data to become available from the input buffer.
7) Copy 1 bit of data from the current offset into the data register.
8) Increment the data offset register and the bit counter register.
9) Check the data offset register if it is equal to 32, then go to step 4 (if "No", go to step 11).
10) Indicate to the input buffer that the data has been taken.
11) Set the data offset register to zero, return to step 4.
12) Output the data register to the encoder block.
13) Wait for the encoder to take the data.
14) Clear the data register and set the bit counter register to zero.
15 Increment the bin counter register.
16) Check the bin counter register against maximum bin count, if lower then go to step 3, if larger then go to step 17.
17) Indicate the transmitter has completed and wait to be reset.
18) Generate the next SYNC data bit.
19) Increment the bit counter register and return to step 3.

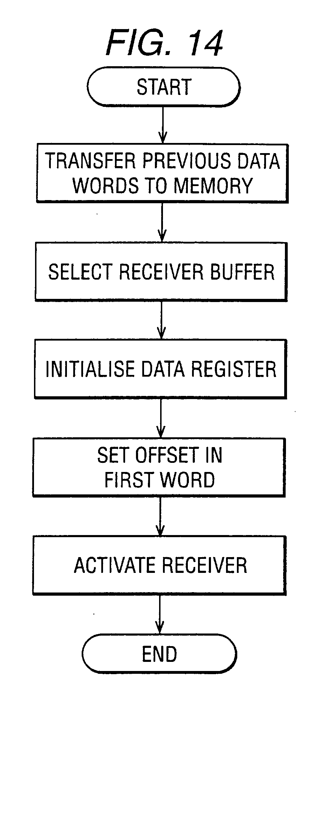

Referring to Fig. 12, which shows the QAMD transmitter encoder 53, this encoder state machine takes data from the slicer module 52, encodes the data into the DTM QAM data pairs and writes it into the memory 24 of the DSP using the following steps:
1) Wait for data to arrive from the slicer module 52.
2) Encode the data.
3) Generate the memory address for the bin in the memory of the DSP.
4) Write the encoded data to the memory of the DSP.
5) Indicate to the slicer module that the data is taken. Return to step 1.

Referring now to the operation of the receiver illustrated in Fig. 3, Fig. 13 shows the receiver initialisation code. Receiver initialisation consists of setting the number of bins to be processed and then setting the table of bin/size pairs 115. Once the QAMD receiver has been initialised, the controlling software will issue requests to convert data from words of QAM pairs 214 from the DSP to binary data 145.

Fig. 14 shows the receiver main per symbol code wherein the main receiver per symbol control sequence consists of the following steps:
1) Transfer the previously converted data block for the DSP memory to the Interleave buffers.
2) Select the next receiver buffer to process.
3) Set the initial value of the data register. This is required so that where the first byte of data is not word aligned, transfer to memory can still use whole word transfers. The initial value will depend on where the data is to be written.
4) Set the initial offset in the first word of data. The offset is determined by how much of the initial word is to remain untouched.
5) Activate the receiver. The receiver will have completed its processing before the next symbol is ready and the code sequence is run again.

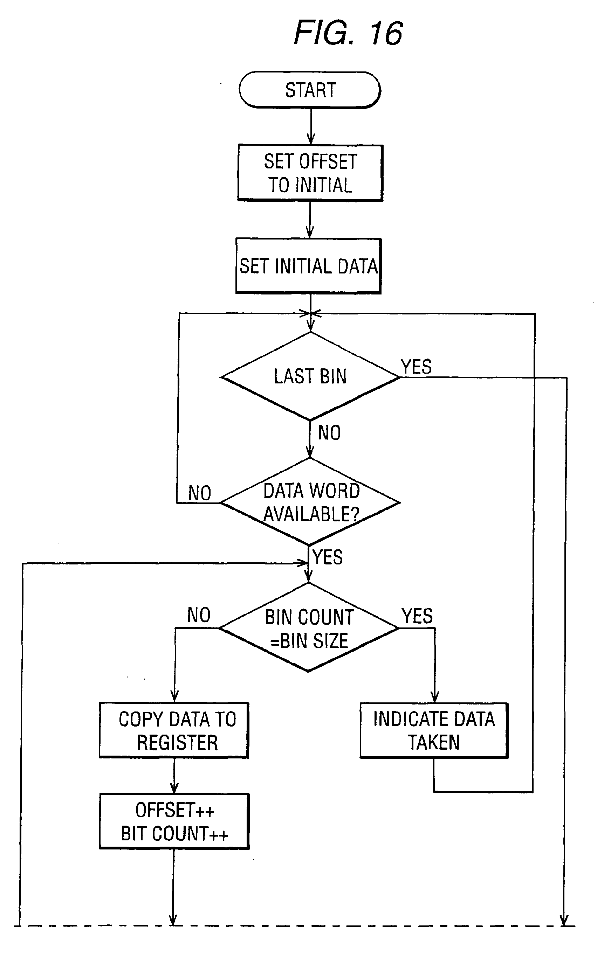

Fig. 15 shows the QAMD receiver data output buffer 61 state machine. This operates in accordance with the following steps:
1) Wait for data to become available from the data combiner 62.
2) Write data to memory 24.
3) Indicate to the data combiner 62 that the data has been taken.

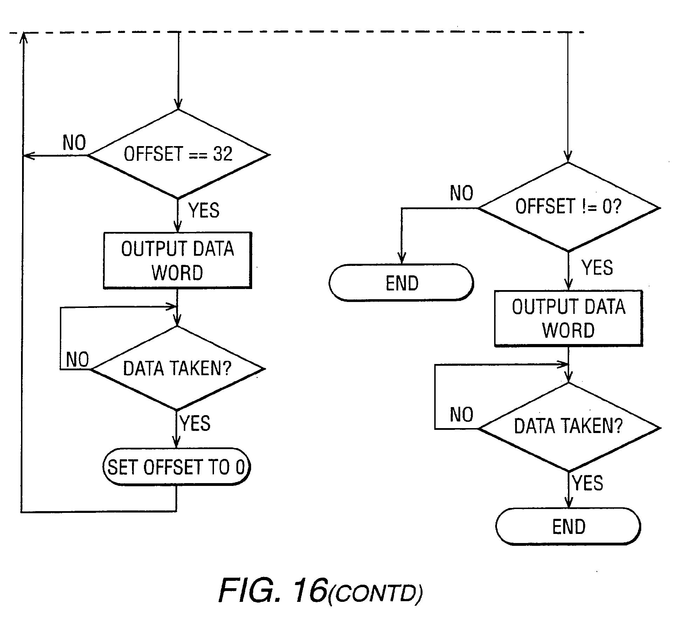

The QAMD data combiner 62 is illustrated in more detail in Fig. 16 where it takes data from the decoded bins and combines it back into data words to be written into memory. The state machine follows the following steps:
1) Set the initial offset for the output data word.
2) Set the initial data to the shift register.
3) Check if the last bin has been processed. If not the last bit, then go to step 4.
   If the last bin, then go to step 13.
4) Check if there is data available from the decoder block. If data is available, go to step 5. If no data is available, return to step 3.
5) Check to see if the current bin data has been completed. If "Yes", go to step 6.
   If not completed, go to step 7.
6) Indicate that the bin data has been taken and return to step 3.
7) Copy the next data bit to the shift register.
8) Increment the offset value and the bit counter.
9) Check to the offset register for full shift register. If not full, return to step 5. If complete, go to step 10.
10) Output the shift register to the data buffer block.
11) Wait for the data to be taken.
12) Set the shift register offset register back to zero. Return to step 5.
13) Check if there is any partial data in shift register. If no data, then terminate process. If data is available, then go to step 14.
14) Output shift register data to data buffer block.
15) Wait for data to be taken.
16) Terminate process.

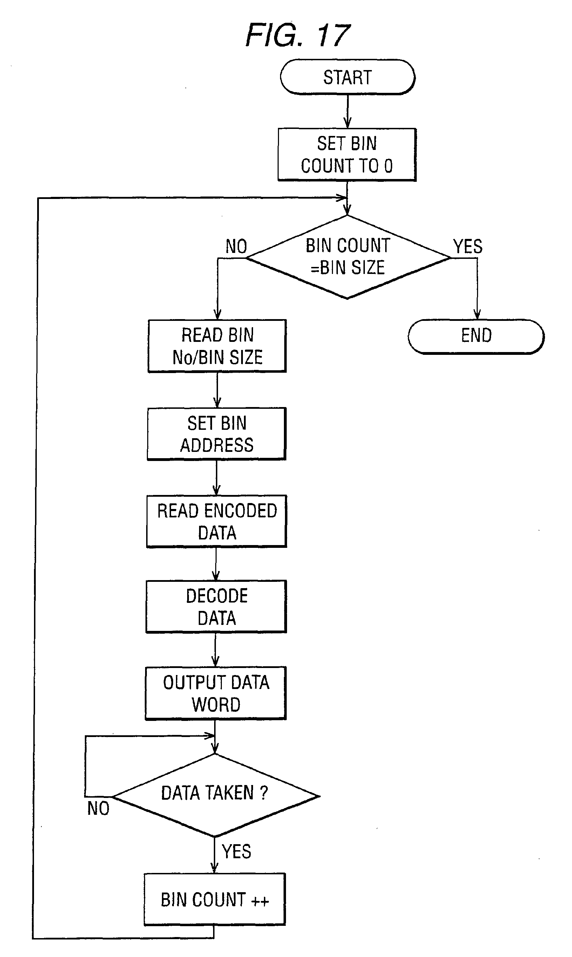

Fig. 17 shows the QAMD receiver data decoder 63 state machine which reads bin number of size pairs for memory, reads QAM pairs from memory, decodes the data, and passes it on the data combiner block 62. This operates in accordance with the following steps:
1) Set the bin count to zero.
2) Check to see if all bins have been processed. If completed, then terminate process. If not completed, then go to step 3.
3) Read the bin number and size from memory.
4) Calculate the address in memory of the encoded data.
5) Read the encoded data.
6) Decode the data.
7) Output the decoded data to the data combiner block.
8) Wait for the data to be taken.
9) Increment the bin counter register. Return to step 2.

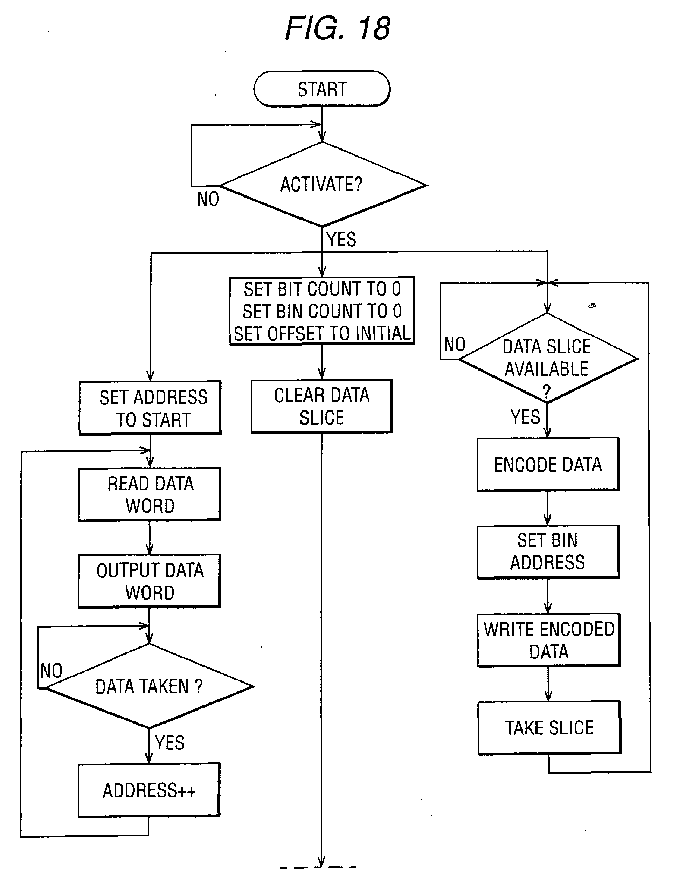

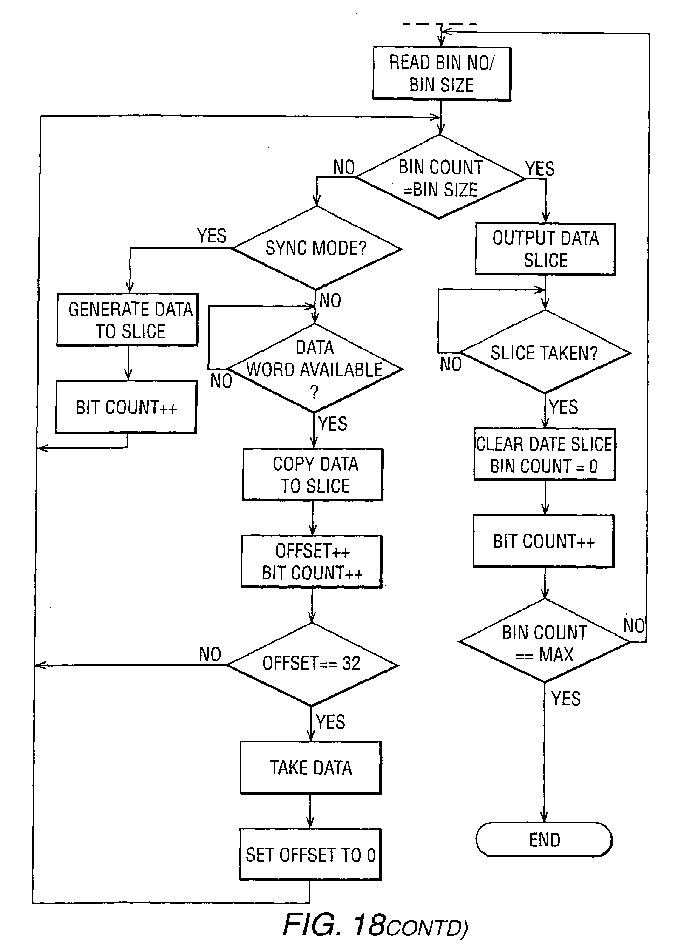

Fig. 18 shows the overall transmitter state machine, incorporating the separate input buffer 51, slicer 52 and encoder 53 state machines.

The registers, inputs and outputs of the QAMD coprocessor sub-blocks will now be described in more detail.

The memory bus interface between each sub-block and the DSP memory 24 includes an address bus (Addr) which is 4 bytes wide, a data bus (Data) which is 4 bytes wide, a request line (Req) and an acknowledgement line (Ack). The operation of a memory bus is well-known and will not be discussed further. In the preferred embodiment, single byte writes to the DSP memory 24 are not possible; only 4 bytes may be written at one time to a word-aligned address (in other words, to an address which is a multiple of four bytes). Similarly, only 4-byte words may be read from the DSP memory 24 from word-aligned addresses. It should be noted, however, that other memory systems may be used which permit byte reads or writes, or reads and writes to and from non-word aligned addresses.

Each sub-block interfaces with the sub-blocks before it and ahead of it (where present) in the processing chain by use of the Taken and Valid interconnections. When a sub-block requires more data from the sub-block behind it in the processing chain, it suspends its operation until the Valid line is asserted by that sub-block, which action indicates that the required data is ready and the Data lines between the two sub-blocks (distinct from the Data lines between a sub-block and the DSP memory 24) have been set accordingly. When the requesting sub-block has read the data, it asserts the Taken line, at which point the sub-block providing the data will clear the Valid line and resume. Finally, in response to the Valid line being cleared, the requesting sub-block clears the Taken line and itself resumes operation.

The input buffer 51 of the transmitter module contains an address register, which provides the address in the DSP memory 24 of the next data word to be loaded. The address register is incremented to point at the next word in the DSP memory 24 after each word is loaded from the memory. An external input is provided to allow the address register to be set directly by the DSP or other external device, for example, when the transmit buffer is swapped. The input buffer outputs 4 byte data words to the slicer, and reads 4 byte data words from memory.

The slicer 52 of the transmitter module contains an offset register, a data register, a bit count register, a bin size register, a bin count register, and a bin address register. External inputs are provided to allow the bin count register (selecting the number of bins to process), the bin address register (the address in the DSP memory 24 of the bin number/bit count table 115) and the data register to be set directly by the DSP or other external device. The slicer receives 4 byte data words from the input buffer, and outputs the bin size, bin number and data slice (1-15 bits) to the encoder. Entries from the bin no/bin size table are read from memory. The sync bit of the transmit control register (see below) is also read.

The encoder 53 of the transmitter module contains a data address register, which provides the address in the DSP memory 24 at which the next amplitude pair should be stored. An external input is provided to allow the data address register to be set directly by the DSP or other external device. The encoder receives data slices from the slicer (1-15 bits), and stores encoded amplitude pairs in memory.

The output buffer 61 of the transmitter module contains an address register, which provides the address in the DSP memory 24 where the next data word is to be stored. The address register is incremented to point at the next word in the DSP memory 24 after each word is stored to the memory. An external input is provided to allow the address register to be set directly by the DSP or other external device, for example, when the receive buffer is swapped. The output buffer receives 4 byte data words from the combiner, and stores 4 byte data words to memory.

The combiner 62 of the transmitter module contains an offset register, a data register, a bit count register, a bin size register, a bin count register, and a bin address register. External inputs are provided to allow the bin count register (selecting the number of bins to process), the bin address register (the address in the DSP memory 24 of the bin number/bit count table 115) and the data register to be set directly by the DSP or other external device. The combiner receives data slices (1-15 bits) from the encoder; outputs 4 byte data words to the output buffer, and outputs the bin size, and bin number to the encoder. Entries from the bin no/bin size table are read from memory.

The decoder 63 of the transmitter module contains a data address register, which provides the address in the DSP memory 24 from which the next amplitude pair should be read. An external input is provided to allow the data address register to be set directly by the DSP or other external device, and an external output is provided to allow the DSP or other external devices to be notified of errors. The encoder reads amplitude pairs from memory and outputs data slices to the slicer (1-15 bits).

In addition to the registers within the sub-blocks, there is a transmit control register within the transmitter module and a receive control register within the receiver module. These control registers are used to signal to the DSP when the conversion is complete, and to set the transmit mode (normal/sync).

In some cases, the registers and inputs chosen for the sub-blocks may be freely substituted by alternatives, or distributed across different sub-blocks. For example, the bit count register of the slicer 52 or combiner 62 could be made to count down to zero rather than count up, by initialising the bit count register with the next bin size whenever the previous bin was completed; the test for a finished bin (bit count equals zero) might also be more straightforward and easier to implement than the current test (bit count equals a varying bin size).

It should be noted that while the present invention finds particular utility in an xDSL DMT communications system, the QAMD coprocessor, either in conjunction with or independent of the DSP as described; the transmitter and receiver modules of the QAMD coprocessor, or the sub-blocks within the QAMD coprocessor, may be employed in situations where variable length streams of bits are processed, and the results of the processing written to memory, wherein the writes to memory must be word-aligned.

Reference is also made to our copending UK Patent Applications entitled:
xDSL Sample Rate Compensation using Phase Balancing
Method and Apparatus for DMA Data Transfer
Digital Signal Processor for FIR Filtering

## Claims

1. A co-processor for a DSP (Digital Signal Processor) having access to a memory, the DSP being adapted for use with a DMT (Discrete Multi-Tone) communication system, the co-processor comprising:
(a) a decoder for converting an input stream of QAM (Quadrature Amplitude Modulated) coordinate pairs into variable length sequences of bits;
(b) a combiner including a data register and an offset register for performing a cycle in which variable length bit sequences from the decoder are assembled into a block of data having a predetermined number of fixed length data words, and
(c) an output buffer, including an address register, for writing said data words into said memory, whereby said data register can be preloaded with a part of a data word in said memory, the offset register being set accordingly and the address register being set to the word-aligned address of the data word in said memory, such that the received data can be stored at a non-word aligned address in memory.

2. An xDSL (Digital Subscriber Line) station having a receiver including the co-processor according to claim 1 wherein the DSP is programmed to set a number of data bins and to generate a mapping table for the bin size/QAM pairs in the xDSL system.

3. An xDSL (Digital Subscriber Line) station including the receiver according to claim 2 and also having a transmitter comprising an input buffer, a slicer, an encoder connected via data buses which are also connected to said memory; the transmitter module being programmed to perform:
(a) initialisation; where bin data is derived by setting the number of data bins and generating a mapping table is generated for bin size/QAM pairs in the DTM system;
(b) storage; where input data is stored in bins in the DSP for processing for conversion to QAM pairs;
(c) synchronisation; where synchronisation data is generated in accordance with the bin data for use by the DSP in processing the stored input data for conversion into the QAM pairs;
(d) data slicing; where the synchronisation data is used for the conversion of the stored input data into QAM data pairs; and
(e) encoding and transmission; where the QAM data pairs are encoded and transmitted.

4. An xDSL station according to claim 3, including means which responds to the control program so as to insert an offset into a first word of input data where the conversion will start, the offset providing any necessary word alignment before the QAMD starts to processes input data.

5. An xDSL station according to claim 3 or 4, including means which responds to the control program so as to set different buffer addresses so that one buffer can be filled whilst data is processed in another buffer.
